# EUROPEAN PATENT SPECIFICATION

(11) **EP 0 387 981 B1**
(45) Date of publication and mention of the grant of the patent: **08.06.1994**
(21) Application number: 90300492.7
(22) Date of filing: 17.01.1990
(51) Int. Cl.: H04N 5/262, G06F 15/62

(54) **Picture Manipulation**
Beeinflussung eines Bildes
Manipulation d'images

(30) Priority: 17.03.1989 GB 8906177
(43) Date of publication of application: 19.09.1990
(73) Proprietor: SONY CORPORATION, Tokyo 141 (JP)
(72) Inventor: Pearman, James Bernard, Basingstoke, Hampshire RG24 OYR (GB); Hedley, David John, Winchester, Hampshire (GB)
(74) Representative: Cotter, Ivan John

(56) References cited:
- EP-A- 0 249 661
- FR-A- 2 565 447
- GB-A- 2 158 322
- US-A- 4 148 070
- US-A- 4 680 622
- ELEKTRONIK, no. 12, 1982, Munich DIETER FOHRY et al. "Digitale Bildverarbeitung mit Tischcomputer" pages 52-56

## Description

This invention relates to the manipulation of pictures represented by video signals.

The art of manipulating pictures represented by digital video signals is well established. In essence, the manipulation is accomplished by: digitising an analogue video signal by sampling it and converting each sample, by pulse code modulation, into a binary word or byte representing that sample; storing fields or frames of the digitised signal in memory; and controlling either the reading to or writing from the memory so as to produce from each field or frame a picture that differs from that represented by the input video signal in that at least one geometrical parameter thereof is changed. Such geometrical parameter may, for example, comprise the location of the picture along one or more of up to three axes and/or the angular position of the picture about one or more axes. Other such parameters may comprise the size of the picture (in the horizontal and/or vertical direction thereof), the extent of shearing of the picture, and the perspective of the picture. One example of an apparatus for manipulating a picture by means of a computer is disclosed by GB-A-2158322.

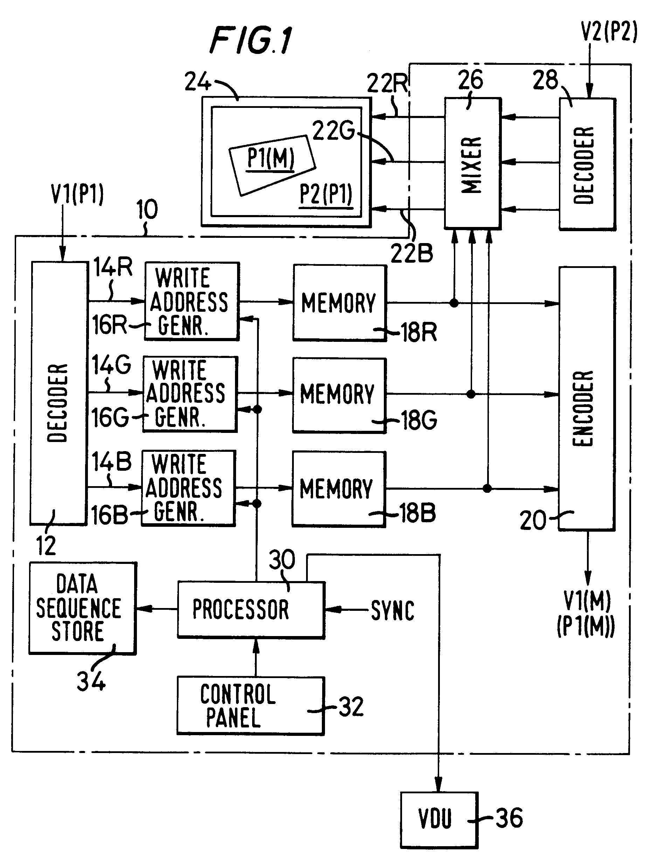

Figure 1 of the accompanying drawing shows in simplified block diagram form the general nature of present day digital video effects (DVE) equipment for effecting such manipulation of a picture. The general kind of apparatus now to be described with reference to Figure 1 has been embodied in a variety of known proprietary items of DVE equipment, and the operation and construction thereof is well known to those skilled in the art.

The DVE equipment, which is designated 10 in Figure 1, comprises a unitary piece of hardware containing the components shown in Figure 1 and described below. A video signal V1 representing a picture P1 that is to be manipulated is inputted into the DVE equipment 10. If, for example, the signal V1 is a colour composite signal, it may be supplied to a decoder 12 which produces R, G and B colour component signals (for example) on busses 14R, 14G and 14B, respectively. (If the input signal V1 is in analogue form, a digitiser (not shown) - for digitising the signal as described above - may be positioned upstream of the decoder 12).

The R, G and B component signals on the busses 14R, 14G and 14B, respectively, are passed to a picture manipulator which comprises write address generators 16R, 16G and 16B and memories 18R, 18G and 18B for the respective component signals. Each memory 18R, 18G and 18B comprises one or more field or frame stores, and mapping between the locations of words in the fields or frames of the input signals on the busses 14R, 14G and 14B and words of corresponding outputs signal read from the memories is controlled (in a manner described more fully below) by the write address generators 16R, 16G and 16B in such a manner that the picture P1 is manipulated.

(Alternatively, the signals on the busses 14R, 14G and 14B can be read to the memories 18R, 18G and 18B, respectively, without manipulation, and the manipulation can be effected by read address generators (not shown) used in substitution for the write address generators 16R, 16G and 16B. In either case, the effect is the same.)

The manipulated component signals can then be treated in any one or more of a variety of ways. For example, as shown in Figure 1, the manipulated signals read from the memories 18R, 18G and 18B can be fed into an encoder which encodes them to form a colour composite video output signal in V1(M), representing a manipulated version P1(M) of the input picture P1, which can be broadcast directly or recorded on a video tape recorder. The manipulated colour component signals read from the memories 18R, 18G and 18B can also be fed via busses 22R, 22G and 22B to R, G and B inputs of a monitor 24 whereby the manipulated picture P1(M) can be viewed on the screen of the monitor. The signals read from the memories 18R, 18G and 18B may, as shown, be supplied to the busses 22R, 22G and 22B via a mixer 26 which receives other R, G and B inputs from a decoder 28 that receives another colour composite video signal V2, representing a picture P2 (which is not manipulated), whereby, as shown on the screen of the monitor 24 in Figure 1, the manipulated picture P1(M) can be superimposed as a foreground picture on the picture P2 (which thus is a background picture).

The manipulation operation performed by the write address generators 16R, 16G and 16B is effected under the control of a processor 30 which receives command information (representing the picture manipulation desired) from a control panel 32. In a manner known per se, the processor 30 is responsive to the command information entered manually by an operator at the control panel 32 to generate data representing a desired manipulation, such data being applied to the write address generators 16R, 16G and 16B which are responsive thereto to effect the above-described mapping function that causes manipulation of the picture. In more detail, the input picture P1 (prior to manipulation) has a rectangular outline. In general, the manipulation involves moving the locations of at least some of the corners of the picture. The data produced by the processor 30 and applied to the write address generators 16R, 16G and 16B may therefore represent the locations of the corners (and may remain constant from field to field or frame to frame or may vary from field to field or frame to frame, depending upon whether the outline of the picture P1(M) is to remain constant or is to change). In more detail, the processor 30 may provide, for each field or frame, a matrix of data representing the locations of the corners of the manipulated picture P1(M) in the plane of the unmanipulated picture P1, and the write address generators 16R, 16G and 16B may, in a manner known per se, be responsive to such data to effect the above-described mapping operation to achieve the desired manipulation.

As represented by the legend "SYNC" in Figure 1, vertical and horizontal synchronisation information is supplied to the processor 30 to ensure that the data it produces is in synchronisation with the video signal V1.

It is known, in the general type of DVE equipment shown at 10 in Figure 1, for alphanumeric information indicating the current location of the manipulated picture P1(M), as dictated by commands entered via the control panel 32, to be displayed to the operator. Such information may, for example, be displayed on a visual display unit (VDU) 36 connected to the processor 30.

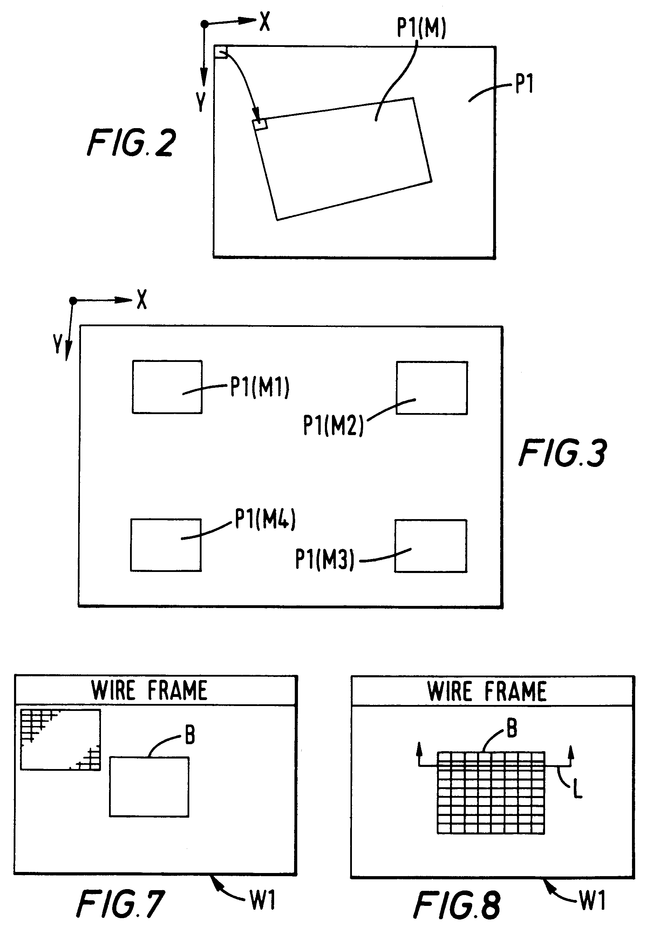

As indicated above, the manipulation performed in the DVE equipment 10 may for example comprise translational and/or rotational movement of the picture P1 with respect to any one or more of three axes. With reference to Figure 2 of the accompanying drawings, which shows the screen of the monitor 24, the X and Y axes can be those of the plane of the screen, as represented in Figure 2, and the Z axis may be that passing through the origin of the X and Y axes perpendicular to the plane of Figure 2. Figure 2 shows, in similar manner to Figure 1, a particular form that the manipulated picture P1(M) may adopt, either for an indefinite duration or for one particular field or frame. As will be appreciated, were the picture not manipulated, it would be displayed in a normal manner on the screen, occupying the full area thereof, as represented at P1 in Figure 2. (That is to say, if no picture P2 were mixed in with the picture P1 and if the picture P1 were not manipulated, the picture P1 would occupy the full area of the screen of the monitor 24.) Figure 2 indicates generally the mapping operation, as described above, which is performed to effect the manipulation. Thus, in writing to each memory 18R, 18G, 18B, the pixel corresponding to the word occupying the upper left-hand corner of the input picture P1 is so written to the corresponding memory that it occupies an address corresponding to that needed for the upper left-hand corner of the manipulated picture P1(M). A similar operation is performed for every other pixel. It should be noted that the mapping operation may involve very complex hardware. In this regard, the location of each pixel of the manipulated picture P1(M) will generally not correspond exactly to the location of a pixel in the input picture P1 whereby an interpolating filter will be needed to interpolate the positions of the pixels of the output pictures to sub-pixel accuracy. Moreover, the operation of the interpolating pixel may vary from field to field with the extent of manipulation required. Thus, as is known to those skilled in the art, the DVE equipment 10 is a very complex and expensive piece of hardware.

Moreover, although the processor 30 may be largely or wholly software-based, in systems as so far available the software is in substance deeply embedded within the hardware such that it cannot easily be altered.

The manipulations (effect creations) that can be performed using the DVE equipment 10 may be of a variety of forms. One simple form of manipulation or effect creation sequence will now be described, by way of example, with reference to Figure 3 of the accompanying drawings. The operator first reduces the size of the picture P1 and changes its X and Y coordinates to form a first manipulated picture at a position P1(M1). He does this by entering appropriate commands on the control panel 32, observing the result on the monitor 24. He then enters further commands instructing that the manipulated picture be swept gradually towards the right, to a position P1(M2). He then enters similar commands instructing it to be swept gradually down to a position P1(M3), then to the left to a position P1(M4), and then up back to the position P1(M1), thereby completing a loop. Clearly, and as is well known, many other forms of manipulation involving translation and/or rotation and/or changes in size and/or shearing and/or perspective can be devised. The various commands involved in completing such a sequence may be stored in a data sequence store 34 and saved for future use.

The general form of known DVE equipment described with reference to Figures 1 to 3 is subject to several disadvantages. A first disadvantage is that the operator requires a great deal of training in order to use the equipment to devise even simple effects. Such training can be performed only on the actual equipment, which is uneconomical in that it involves taking up the time of a very expensive piece of equipment which could be employed to earn money. A second disadvantage is that even experienced operators may require a very long period of time to devise a particular effect, which again involves uneconomical use of the expensive equipment. These two factors may lead to the need to acquire several pieces of DVE equipment for training and/or devising effects when only one would suffice for the actual carrying out of effects. A third disadvantage is that since, as explained above, the software that performs the processing carried out by the processor 30 is deeply embedded within the hardware, it is difficult or impossible to add on further desired features after manufacture of the equipment, i.e. either features not thought needed by the user when the system was designed or features devised after the design was effected.

According to one aspect of the present invention there is provided apparatus for manipulating a picture represented by a video signal, the apparatus comprising:
a picture manipulator responsive to data representing a desired manipulation to manipulate a picture represented by a video signal supplied thereto by changing at least one geometrical parameter thereof;
manual input means for entering command information indicative of how it is desired that the picture be manipulated; and
processor means responsive to said command information to generate said data representing a desired manipulation;
characterised in that:
the manual input means comprises a manual input means to a computer;
the computer incorporates processing software that enables the computer to act as the processor means;
the computer has a visual display unit and incorporates display software that causes the visual display unit to display, at the same time that the computer is being used to generate said data, a frame which is subjected to the same manipulation as that desired for the picture; and
the computer is selectively connectable to the picture manipulator such that the computer can be used on-line to generate said data and supply it to the manipulator to control the manipulator or can be used off-line to generate said data.

According to a second aspect of the invention there is provided, a computer for use with a picture manipulator responsive to data representing a desired manipulation to manipulate a picture represented by a video signal supplied thereto by changing at least one geometrical parameter thereof, the computer comprising:
manual input means for entering command information indicative of how it is desired that the picture be manipulated;
the computer incorporating processing software that enables the computer to act as processor means responsive to said command information to generate said data representing a desired manipulation; and
a visual display unit;
the computer incorporating display software responsive to said command information to cause the visual display unit to display, at the same time that the computer is being used to generate said data, a frame which is subjected to the same manipulation as that desired for the picture.

The invention enables the above-described disadvantages to be overcome or at least substantially alleviated. In this regard, the computer can be used wholly off-line both for training and for the devising of effects. A new operator need not be given access to the expensive and complex hardware embodied in the picture manipulator until he has completed his training. Moreover, an experienced operator can devise an effect at his leisure on an off-line basis, for example on a desk-top computer in his office and/or at home, and needs access to the picture manipulator only when he has devised the effect. Thus, the economy of usage of the complex and expensive picture manipulator is optimised. It is, for example, possible for a particular organisation to have, say, a single picture manipulator and several of the computers. Thus, for instance, various operators can devise effects on respective computers, save them to disc, and then load the discs into a particular computer normally associated with the particular picture manipulator for usage. Further, since the data representing a desired manipulation is generated by virtue of the computer being caused to act as the processor means due to the processing software incorporated in the computer, the processor means can readily be changed simply by loading modified processing software into the computer.

The invention will now be further described, by way of illustrative and non-limiting example, with reference to the accompanying drawings, in which like references indicate like items throughout, and in which:-
Figure 1 is a block schematic diagram representing a generally known type of apparatus or equipment for manipulating a picture represented by a video signal;
Figure 2 shows the screen of a monitor connected to the apparatus of Figure 1 and shows how a picture represented by a video signal may be manipulated;
Figure 3 again shows the screen of the monitor and illustrates, by way of example, a particular digital video effect that can be achieved by using the apparatus of Figure 1;
Figure 4 shows apparatus embodying the invention for manipulating a picture represented by a video signal;
Figures 5 and 6 show examples of the display provided on a screen of a visual display unit (VDU) of a computer forming part of the apparatus of Figure 4; and
Figures 7 and 8 show examples of different information provided on one particular window of the VDU screen.

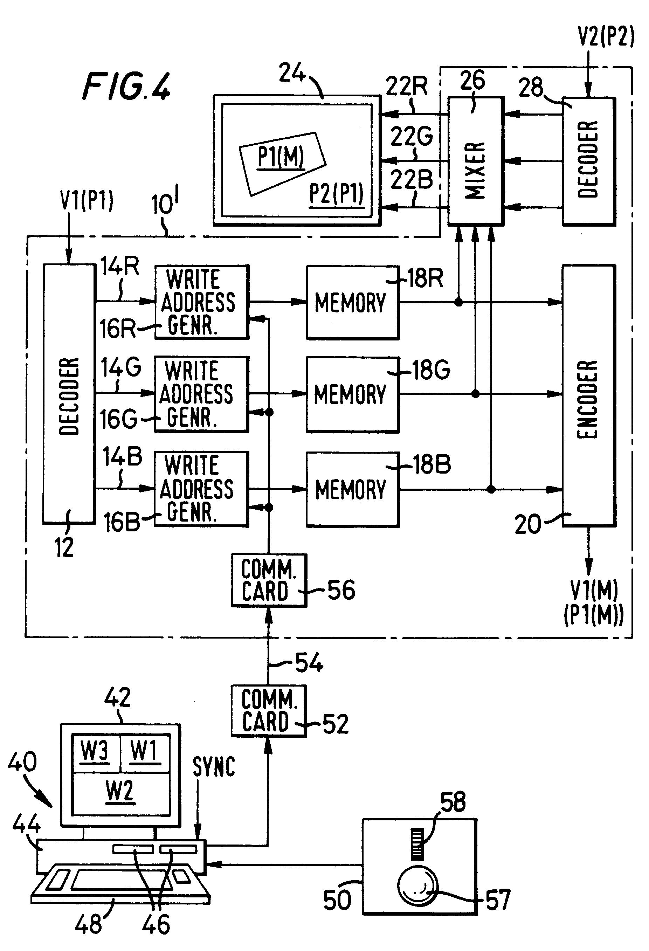

Figure 4 shows apparatus embodying the invention for manipulating a picture represented by a video signal. The apparatus of Figure 4 is in some respects generally the same as that described with reference to Figure 1 and will therefore be described only in so far as it differs therefrom. References used in Figure 4 that correspond to references used in Figure 1 indicate like items.

The apparatus of Figure 4 comprises DVE equipment 10′ which is in essence the same as the DVE equipment 10 described with reference to Figure 1 except that the processor 30, control panel 32, data sequence store 34 and VDU 36 are not used.

The apparatus of Figure 4 includes a computer 40 connected to the DVE equipment 10′. The computer 40 comprises a VDU 42, a processor console 44 having one or more floppy disc drives 46 (and, if desired, containing a hard disc (not shown)), a manual input means constituted by a conventional keyboard 48 and a track ball assembly 50, and a communications card 52 (in fact installed within the console 44, though shown separately for convenience in Figure 4) which is connected by a standard bus 54 to a corresponding communications card 56 within the DVE equipment 10′. The communications cards 52 and 56 can be high speed serial control cards using RS-422 balanced serial communications at 500 kilobauds. In the present arrangement, the computer 40 is a substantially standard IBM-compatible desk top computer, though other types of computer (e.g. so-called work stations) could instead by employed.

In the apparatus of Figure 4, the keyboard 48 and track ball assembly 50 (which comprises a track ball 57 and a wheel 58) replaces the control panel 32 in the apparatus of Figure 1. Also, processing software that enables the computer 40 to act as the processor 30 and data sequence store 34 of the apparatus of Figure 1, and display software described below, is loaded in the computer 40.

The computer 40 includes operating software that, in a manner well known per se, enables windowing of the display provided by the VDU 42. That is to say, it enables respective difference items of information generated by the display software in response to commands entered via the keyboard 48 and track ball assembly 50 to be displayed in respective winds W1, W2 and W3 of the screen of the VDU 42, as explained in more detail below.

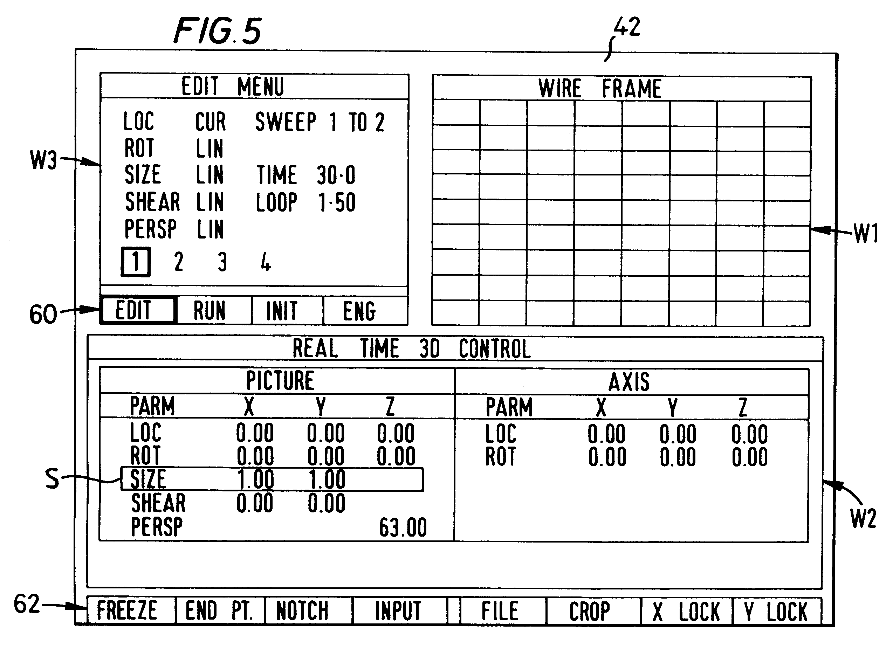

The three windows W1, W2 and W3 are shown in more detail in Figure 5.

The window W1, as will be explained below, is particularly important in that it displays an analogue of the visual effect being achieved by manipulations entered by means of the keyboard 48 and track ball assembly 50 whereby, even if the computer 40 is off-line, i.e. not connected to the DVE equipment 10′, the operator (or trainee operator) can see what effect he is achieving. More specifically, the window W1 displays a frame which is subjected to the same manipulation as that (as indicated by the inputted commands) desired for the manipulated picture P1(M). In this regard, it was explained above that the processing software in the computer 40 performs the function of the processor 30 in Figure 1, namely providing data in the form of a matrix identifying the locations of the corners of the manipulated picture P1(M). As will be clear to those with even an elementary knowledge of computer programming, it is readily possible, given such coordinates, to draw a frame linking the positions of those corners. Further, it is readily possible to draw a grid of lines which are contained within the outline defined by the frame and which, when the picture is unmanipulated, are parallel to the edges of said outline. The grid in fact comprises the well known so-called wire frame commonly used in, for example, computer aided design (CAD) equipment. The display software in the computer 40 is therefore responsive to the matrix of data provided by the processing software to generate substantially in real time, and display in the window W1, a wire frame which is subjected to the same manipulation as that to which the picture P1 is subjected, as viewed on the monitor 24 if the computer 40 is on-line, namely connected to the DVE equipment 10′, or that to which the picture would be subjected if the computer were on-line. The operator or trainee operator can thereby readily see, by observing the window W1, the results of commands he has entered, in that the wire frame in the window W1 indicates visually the current location (translational and rotational) of the manipulated picture in the same way as the manipulated picture proper is displayed on the monitor 24.

The window W2 displays alphanumeric information corresponding to that displayed by the wire frame in the window W1. The information in the window W2 is thus generally similar to that provided in the apparatus of Figure 1 on the VDU 36. This has the advantage of presenting information that is familiar to that provided in known equipment whereby an operator experienced in using the known equipment will feel comfortable with the apparatus of Figure 4 in that the display it provides will not be totally unfamiliar. Furthermore, the fact that the windows W1 and W2 are both in the field of view of the operator at the same time means that it is easy for the operator to observe and compare both the visual representation of the current picture location given by the wire frame and the alphanumeric information representing the current picture location.

In more detail, the window W2 provides two sets of information in two regions labelled "PICTURE" and "AXIS", respectively. In each such region, the column heading "PARM" is an abbreviation for "parameter" and the columns headed X, Y and Z indicate values of X, Y and Z, as appropriate, for each parameter listed. In the region labelled "PICTURE", the parameters are: location ("LOC"), which indicates the translational position of the manipulated picture with respect to a reference position corresponding to non-manipulation; rotation ("ROT"), which indicates the extent of rotation; size, which indicates the size in both the X and Y directions with respect to a non-manipulated picture; shear, which indicates the extent to which the picture is sheared (subjected to manipulation such that opposite edges move with respect to one another but remain parallel whereby the rectangular non-manipulated picture adopts the form of a parallelogram); and perspective. It can be seen from the particular values of the parameters shown in Figure 5 that, in this case, the current picture location as represented by the wire frame in the window W1 is not manipulated. That is to say, there is no translation or rotation, the size is unity in both the X and Y directions, there is no shearing and the perspective is at a value (63.00) corresponding to the picture not being manipulated to display any perspective.

The region of the window W2 labelled "AXIS" represents the location and extent of rotation of a user-defined axis about which the picture can be rotated. In this regard, in the apparatus of Figure 4, rotation can be effected about the axis of the screen (i.e. the window W1), the axis of the picture, or the user-defined axis. The axis selected at any particular time is displayed on the window W2, though this information is not presented on Figure 5 for the sake of clarity.

In Figure 5, a box S is shown surrounding (outlining) the third row (SIZE) of the four columns in the region of the window W2 labelled "PICTURE". The box S preferably is displayed in a different colour than the rest of the window W2 or in some other manner enabling it readily to be seen. By using cursor (arrow) keys of the keyboard 48, the box S can be moved so as to surround any one of the four rows of the four columns in the region of the window W2 labelled "PICTURE" or any one of the two rows of the four columns in the region of the window W2 labelled "AXIS". The display software is responsive to the actuation of the cursor keys that puts the box S into a desired position to accept command information received from the track ball assembly 50 as being information indicative of a change to be affected in the parameter associated the current position of the box. For example, if the box S is moved two rows up from the position shown in Figure 5, so as to surround the row relating to location of the picture, rotation of the track ball 57 in one sense causes translational movement of the picture in the X direction and rotation of the track ball 57 in the other sense causes translational movement of the picture in the Y direction. Rotation of the wheel 58 causes translational movement of the picture in the Z direction. Thus, the picture readily can be moved. Similarly, when rotation of the picture is selected by moving the box S down by one column, the picture can be rotated about the X, Y and Z axes using the track ball 57 and wheel 58. Likewise, when size or shear is selected, the size or extent of shear of the picture can be changed in the X and/or Y direction by moving the track ball 57, any input due to rotation of the wheel 58 in these cases being ignored. Further, the translational and rotational location of the user defined axis can be altered by positioning the box S to surround the appropriate row in the region of the window W2 labelled "AXIS". Similar effects could be achieved by using a joystick or mouse in substitution for the track ball, or even by using keys of the keyboard 48.

The window W3 presents an edit menu and has an edit bar 60 at the bottom indicating four data generation modes EDIT, RUN, INIT (initialisation) and ENG (engineering) that can be selected by pressing the appropriate one of four menu keys forming part of the keyboard 48. The mode selected is highlighted on the menu 60, the EDIT mode having been selected in the particular case shown in Figure 5.

At the bottom of the screen 42, there is displayed a row of labels 62 that identify functional features currently available that can be selected by operating corresponding function keys of the keyboard 48.

The operation of the apparatus of Figure 4 will now be described in more detail with reference to Figure 5.

When the computer 40 is first used, the processing software has to be set up to conform with the hardware of the DVE equipment 10′. This is performed by selecting the initialisation (INIT) and engineering (ENG) modes by using the menu keys and need not be described in detail.

Suppose then, for example, that the operator wishes to create the effect described above with reference to Figure 3. Firstly, he selects the EDIT mode by pressing the associated menu key. He then uses the cursor keys of the keyboard 48 to position the box S around the row of entries in the region labelled "PICTURE" of the window W2 relating to size and, using the track ball assembly 50, reduces the manipulated picture to the size shown in Figure 3. As a result, the wire frame displayed on the window W1 shrinks to a size which is the same as that of the manipulated picture as shown in Figure 3, though it remains located centrally of the window W1. (If the computer 40 were on line, the picture displayed on the monitor 24 would shrink in exactly the same manner.) He then selects "location", by moving the box S up two rows, and uses the track ball assembly 50 to move the shrunk picture to the location shown at P1(M1) in Figure 3. The shrunk wire frame moves accordingly.

When the picture has thus been moved to the position P1(M1), the operator can press a particular one of a plurality of dedicated keys on the keyboard 48, which has the effect of storing that position or end point. In similar manner, the operator uses the track ball assembly 50 and the dedicated key on the keyboard 48 to define end points corresponding to the other three positions P1(M2), P1(M3) and P1(M4) shown in Figure 3. To simplify his task, the operator can, during this process, depress an appropriate one of the function keys corresponding to the labels X-LOCK and Y-LOCK in the row 62, which respectively disable the track ball assembly 50 from moving the picture in the X and Y directions to ensure that, when these features are selected, movement only in the Y and X directions, respectively, is possible.

Having selected the end points, the operator then selects the RUN mode by pressing the menu key corresponding thereto. In the RUN mode, the operator can select how movement between the selected end points is achieved. The operator can thus, for example, choose the time taken to move between the end points and whether or not the picture is to continually loop around between the end points. Information corresponding to the effect created is displayed, in coded alphanumeric form, in the window W3. The operator can observe the effect by watching the wire frame in the window W1 and the information displayed in the window W2 and can continually refine and adapt it until he is satisfied with it. When he is satisfied with it, he can press the function key corresponding to the FILE label in the row 62 whereby the created effect sequence or series of manipulations can be saved. The created effect may then, for example, be written to a floppy disc in one of the drives 46, when the computer 40 is being used off-line, and taken to another like computer 40 connected to the DVE equipment 10′ for actual use.

In the EDIT mode, the information displayed in the window W3 contains, at the bottom, four numbers 1 to 4 corresponding to the selected end points. The highlighting of a number (the number 1 being highlighted in Figure 5) indicates the current end point selected. In the RUN mode, a bar graph (not shown) indicates the current position within the effect.

As regards the remaining labels shown in the row 62 in Figure 5, depressing the function key labelled FREEZE enables the operator to select whether the manipulated picture is frozen or whether it is allowed to continue moving in accordance with the input picture. The function key corresponding to the NOTCH label enables stepwise movement or rotation for evaluation. The function corresponding to the CROP label is explained below.

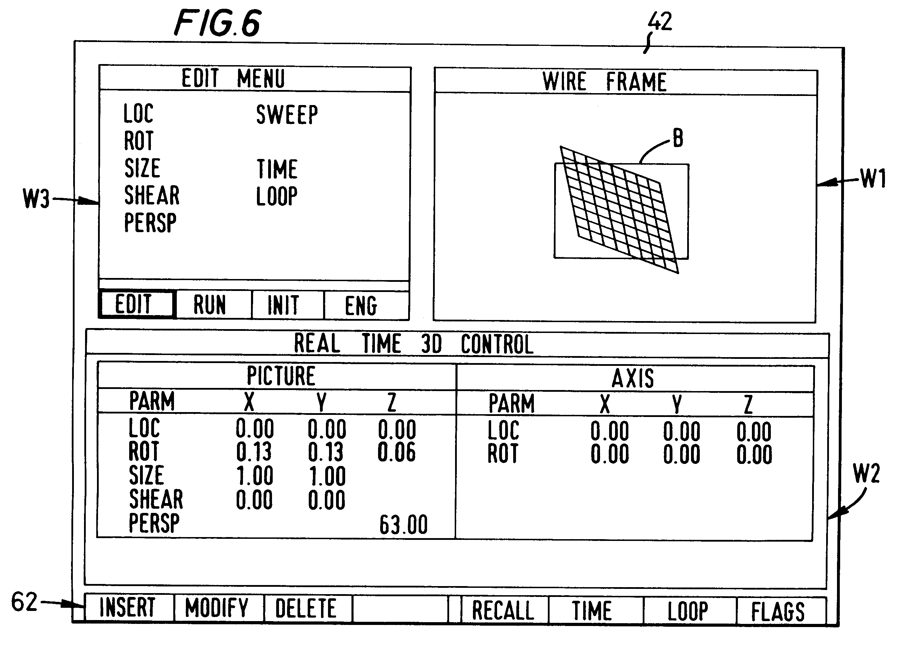

Figure 6 shows the screen of the VDU 42 at a stage during the creation of another effect.

One thing that can be observed from Figure 6 is that the labels in the row 62 are different. This is because the software is operative to change the labels at particular points within various routines in accordance with the features then desired.

It will also be seen from the PICTURE region of the window W2 that, in Figure 6, the values for the rotation of the picture have values other than zero. Specifically, the picture has been rotated by 0.13 of a revolution about the X axis, 0.13 of a revolution about the Y axis and 0.06 of a revolution about the Z axis, which rotation is represented in the window W1 by a corresponding rotation, in the three directions, of the wire frame.

It will also be observed from Figure 6 that, although the picture has not been reduced in size, i.e. the values for size in both the X and Y directions (as shown in the PICTURE region of the window W2) are still unity, the wire frame occupies only a small area of the window W1. This is because, in the case of Figure 6, command information has been entered via the keyboard 48 to cause the window W1 to display an area which lies in the plane of the unmanipulated picture and is larger than the unmanipulated picture (whose area corresponds to that represented on the monitor 24). The boundary B of the unmanipulated picture is displayed in the window W1, whereby the relationship of the wire frame with the boundary can be observed even though the manipulated picture (as represented by the wire frame) is located partly outside of the wire frame. This feature, namely that of displaying an area larger than the picture boundary, is very helpful to operators. In this regard, with the conventional apparatus of Figure 1 it is very easy, by accident, to input information which will cause the manipulated picture to go entirely off the screen of the monitor 24. It can then be very difficult to find it. However, as is shown in Figure 7, if the above-described feature is selected in the apparatus of Figure 4 it is possible to observe the wire frame even if (within certain limits) it disappears entirely outside of the boundary B (corresponding to the edges of the screen of the monitor 24). It is therefore easy to find the picture. Moreover, this feature can be useful when it is desired to devise an effect sequence in which the manipulated picture is to move from a position entirely off the screen to an on screen position or to move from an on screen position to a position entirely off the screen, since the entire sequence can be viewed.

There are some cases in which it is desired that the manipulation of the picture should involve the cropping of a part thereof, for example a part at the top in which a boom microphone has inadvertently been allowed to move into picture. The function key associated with the above-mentioned CROP label in the row 62 of Figure 5 can be used in this connection. When this feature is selected, a coloured frame readily distinguishable from the wire frame (and the boundary B, if displayed) can be displayed on the window W1 and moved to define the area to be retained. Suppose, for example, referring to Figure 8, the part of the picture corresponding to the part of the wire frame above a line L is to be cropped. The frame is positioned so as to enclose the part of the wire frame below the line L. Then, when CROP is selected, the part above the line L is removed. When this has been done, it is of course desired to fill in the part of the picture above the line L in some way in order to ensure that the manipulated picture covers all the area of the unmanipulated picture, as represented by the boundary B. This can be done by depressing an "autosize" key, in which event the processing software is responsive thereto to expand the manipulated picture to such an extent that it covers all the area of the unmanipulated picture as represented by the boundary B. In the case of the particular example of Figure 8, this would involve only a slight increase in size in the Y direction.

Similarly, it may be necessary to rotate a picture slightly to compensate for a slightly incorrect camera set up. In this event, the manipulated picture would again not cover all of the area of the unmanipulated picture. In this case, pressing the autosize key would result in slight expansion in both the X and Y directions, to the extent that the area within the boundary B is completely filled.

As will be appreciated from the foregoing, the computer 40 (which will cost very much less than the expensive DVE equipment) can be used off-line both for operator training and for the devising of time-consuming effects. Therefore, a typical organisation might have a single computer 40 associated with a single item of DVE equipment 10′ for operating it on an on-line basis, and several off-line computers 40 which can be used for training and/or for the generation of effects which can be saved to disc and loaded into the computer 40 associated with the DVE equipment 10′ when needed. Since the organisation may already possess some computers suitable for use as the computer 40, if fitted with the track ball assembly 50 and communications card 52 and loaded with the processing software and display software, the organisation may be able to use these on an off-line basis, as and when required, thereby minimising the capital cost of installing the equipment. It should also be appreciated that, in the apparatus of Figure 4, since the processing function is achieved by virtue of the processing software in the computer 40, it is readily possible to enhance the processing features merely by replacing the software in the computer 40 with enhanced software.

Although not described above with reference to Figure 1, DVE equipment of the present type may include a facility for manipulating either one of two pictures (picture A and picture B) represented by respective video signals, rather than (as described above) only a single picture P1. Thus, for example, an effect can be created in which picture A is first displayed, the picture is then rotated about a vertical axis and, as the picture becomes edge-on to the screen, i.e. as it is rotated past 90^{o} about the vertical axis, either picture B or picture A is then displayed "on the back", as it were, of the picture. If this facility is provided in the DVE equipment 10′, the processing software in the computer 40 can be operative to display either "A" or "B" in the window W1.

In the arrangement described above, all of the manipulations of the rectangular unmanipulated picture are such as to result in a picture which, while in three-dimensions, can be considered to be a distorted rectangle and/or a rectangle viewed otherwise than straight on. However, the invention is more generally applicable to more complex video effects in which the rectangular unmanipulated picture is manipulated into a more complex form, for example "wrapped" in three-dimensions to form a sphere or cylinder or part thereof. In this event, of course, the processing software may need to be more powerful in that the data it creates will need to be more than a matrix of data identifying the positions of the four corners of the picture.

## Claims

1. Apparatus for manipulating a picture represented by a video signal, the apparatus comprising:
a picture manipulator (16R, 16G, 16B, 18R, 18G, 18B) responsive to data representing a desired manipulation to manipulate a picture represented by a video signal supplied thereto by changing at least one geometrical parameter thereof;
manual input means (48, 50) for entering command information indicative of how it is desired that the picture be manipulated; and
processor means responsive to said command information to generate said data representing a desired manipulation;
characterised in that:
the manual input means (48, 50) comprises a manual input means to a computer (40);
the computer (40) incorporates processing software that enables the computer to act as the processor means;
the computer (40) has a visual display unit (42) and incorporates display software that causes the visual display unit to display, at the same time that the computer is being used to generate said data, a frame which is subjected to the same manipulation as that desired for the picture; and
the computer (40) is selectively connectable to the picture manipulator such that the computer can be used on-line to generate said data and supply it to the manipulator to control the manipulator or can be used off-line to generate said data.

2. Apparatus according to claim 1, wherein the computer (40) includes operating software that enables windowing of the display provided by the visual display unit (42), and wherein the display software is operative to cause said frame to be displayed in a first window (W1) and to display, in a second window (W2), in alphanumeric form, information corresponding to that displayed by the frame in the first window (W1).

3. Apparatus according to claim 2, wherein the display software is operative to display, in a third window (W3), alphanumeric information, which, in conjunction with menu control keys, enables different modes for generating said data to be selected.

4. Apparatus according to claim 1, claim 2 or claim 3, wherein the display software is capable of displaying an area which lies in the plane of the unmanipulated picture, is larger than the unmanipulated picture, and has the boundary (B) of the unmanipulated picture displayed thereon, whereby the relationship of said frame with said boundary can be observed even when the manipulated picture (represented by the frame) is located at least partly outside of the frame.

5. Apparatus according to any one of the preceding claims, wherein said frame comprises an outline which, when the picture is unmanipulated, is rectangular and corresponds to the edges of the picture.

6. Apparatus according to claim 5, wherein said frame comprises a so-called wire frame, namely a grid of lines which are contained within said outline and which, when the picture is unmanipulated, are parallel to the edges of said outline.

7. Apparatus according to any one of the preceding claims, wherein, if said command information comprises an instruction that results in the picture being manipulated such that it does not cover all of the area of the unmanipulated picture, the processing software is responsive to operation of an autosize control of the manual input means (48) to expand the manipulated picture to an extent that it covers all of the area of the unmanipulated picture.

8. Apparatus according to any one of the preceding claims, wherein the display software is operative to display, along the bottom of the display provided by the visual display unit (42), a row (62) of labels identifying functional features currently available by operating corresponding function keys of the manual input means (48).

9. Apparatus according to any one of the preceding claims, including a plurality of said computers (40) each selectively connectable to the picture manipulator.

10. A computer for use with a picture manipulator responsive to data representing a desired manipulation to manipulate a picture represented by a video signal supplied thereto by changing at least one geometrical parameter thereof, the computer (40) comprising:
manual input means (48, 50) for entering command information indicative of how it is desired that the picture be manipulated;
the computer (40) incorporating processing software that enables the computer to act as processor means responsive to said command information to generate said data representing a desired manipulation; and
a visual display unit (42);
the computer incorporating display software responsive to said command information to cause the visual display unit (42) to display, at the same time that the computer is being used to generate said data, a frame which is subjected to the same manipulation as that desired for the picture.

11. A computer according to claim 10, which includes operating software that enables windowing of the display provided by the visual display unit (42), and wherein the display software is operative to cause said frame to be displayed in a first window (W1) and to display, in a second window (W2), in alphanumeric form, information corresponding to that displayed by the frame in the first window (W1).

12. A computer according to claim 11, wherein the display software is operative to display, in a third window (W3), alphanumeric information, which, in conjunction with menu control keys, enables different modes for generating said data to be selected.

13. A computer according to claim 10, claim 11 or claim 12, wherein the display software is capable of displaying an area which lies in the plane of the unmanipulated picture, is larger than the unmanipulated picture, and has the boundary (B) of the unmanipulated picture displayed thereon, whereby the relationship of said frame with said boundary can be observed even when the manipulated picture (represented by the frame) is located at least partly outside of the frame.

14. A computer according to any one of claims 10 to 13, wherein said frame comprises an outline which, when the picture is unmanipulated, is rectangular and corresponds to the edges of the picture.

15. A computer according to claim 14, wherein said frame comprises a so-called wire frame, namely a grid of lines which are contained within said outline and which, when the picture is unmanipulated, are parallel to the edges of said outline.

16. A computer according to any one of claims 10 to 15, wherein, if said command information comprises an instruction that results in the picture being manipulated such that it does not cover all of the area of the unmanipulated picture, the processing software is responsive to operation of an autosize control of the manual input means (48) to expand the manipulated picture to an extent that it covers all of the area of the unmanipulated picture.

17. A computer according to any one of claims 10 to 16, wherein the display software is operative to display, along the bottom of the display provided by the visual display unit (42), a row (62) of labels identifying functional features currently available by operating corresponding function keys of the manual input means (48).

18. A computer according to any one of claims 10 to 17, which is connected to the picture manipulator to supply said data thereto as the data is created.

19. A computer according to any one of claims 10 to 17, wherein said data created therein can be saved to a storage medium therein for subsequent supply to the picture manipulator.

20. A computer according to claim 19, which can be selectively connected to the picture manipulator to supply said stored data thereto when desired.

21. A computer according to claim 19, wherein said storage medium can be removed from the computer (40), which is not connected to the picture manipulator, and read by another like computer (40) connected to the picture manipulator and supplied to the picture manipulator by the other computer.

22. A method of manipulating a picture represented by a video signal, the method comprising the steps of:
entering, via manual input means (48, 50), command information indicative of how it is desired that the picture be manipulated;
generating data representing a desired manipulation with processor means responsive to said command information; and
manipulating, with a picture manipulator (16R, 16G, 16B, 18R, 18G, 18B), a picture represented by a video signal supplied to the picture manipulator by changing at least one geometrical parameter thereof in response to said data.
characterised in that:
the manual input means (48, 50) comprises a manual input means to a computer (40); and
the computer (40) incorporates processing software that enables the computer to act as the processor means; and by the steps of:
displaying a frame which is subjected to the same manipulation as that desired for the picture using the computer (40) which has a visual display unit (42) and incorporates display software that causes the visual display unit to display the frame; and
selectively connecting the computer (40) to the picture manipulator such that the computer can be used on-line to generate said data and supply it to the manipulator to control the manipulator or can be used off-line to generate said data.

## Patentansprüche

1. Vorrichtung zur Beeinflussung eines durch ein Videosignal repräsentierten Bildes, wobei die Vorrichtung umfaßt:
eine Bildbeeinflussungsschaltung (16R, 16G, 16B, 18R, 18G, 18B), welche auf Daten, die eine gewünschte Beeinflussung repräsentieren, reagiert, um ein durch ein Videosignal repräsentiertes Bild, welches dieser zugeführt wurde, durch Verändern mindestens eines geometrischen Parameters davon zu beeinflussen;
manuelle Eingabemittel (48, 50) zur Eingabe von Befehlsinformation, welche anzeigt, auf welche Weise es gewünscht ist, daß das Bild beeinflußt wird; und
eine Prozessoreinrichtung, welche auf die Befehlsinformation reagiert, um die Daten, welche eine gewünschte Beeinflussung repräsentieren, zu erzeugen;
dadurch gekennzeichnet:
daß die manuellen Eingabemittel (48, 50) eine Eingabeeinrichtung für einen Computer (40) umfassen;
daß der Computer (40) eine Verarbeitungssoftware enthält, welche es dem Computer ermöglicht, als Prozessoreinrichtung zu funktionieren;
daß der Computer (40) ein Datensichtgerät (42) besitzt und eine Bildschirmsoftware enthält, welche das Datensichtgerät zu der gleichen Zeit, in welcher der Computer dazu verwendet wird, die Daten zu erzeugen, veranlaßt, einen Bildrahmen anzuzeigen, welcher der gleichen Beeinflussung unterzogen worden ist, wie jener, welche für das Bild gewünscht worden ist; und
daß der Computer (40) mit der Bildbeeinflussungsschaltung selektiv derart verbindbar ist, daß der Computer on-line verwendet werden kann, um die Daten zu erzeugen und sie der Beeinflussungsschaltung zur Steuerung der Beeinflussungsschaltung zuzuführen, oder off-line verwendet werden kann, um die Daten zu erzeugen.

2. Vorrichtung nach Anspruch 1, bei welcher der Computer (40) eine Betriebssoftware enthält, welche eine Fenstertechnik der Anzeige ermöglicht, welche bei dem Datensichtgerät (42) vorgesehen ist, und bei der die Bildschirmsoftware wirksam ist, um zu veranlassen, daß der Bildrahmen in einem ersten Fenster (W1) angezeigt wird, und in einem zweiten Fenster (W2) eine Information in alphanumerischer Form anzuzeigen, welche jener durch den Bildrahmen in dem ersten Fenster (W1) angezeigten entspricht.

3. Vorrichtung nach Anspruch 2, bei der die Bildschirmsoftware wirksam ist, um in einem dritten Fenster (W3) alpanumerische Information anzuzeigen, welche es in Verbindung mit den Menuesteuertasten ermöglicht, daß verschiedene Betriebsarten zur Erzeugung der Daten ausgewählt werden können.

4. Vorrichtung nach Anspruch 1, 2 oder 3, bei der die Bildschirmsoftware imstande ist, einen Bereich anzuzeigen, welcher in der Ebene des unbeeinflußten Bildes liegt, größer als das unbeeinflußte Bild ist, und die Begrenzung (B) des darauf angezeigten unbeeinflußten Bildes besitzt, wobei das Verhältnis des Bildrahmens mit der Begrenzung selbst dann beobachtet werden kann, wenn sich das beeinflußte Bild (repräsentiert durch den Bildrahmen) mindestens teilweise außerhalb des Bildrahmens befindet.

5. Vorrichtung nach einem der vorhergehenden Ansprüche, bei welcher der Bildrahmen eine Umrißlinie aufweist, welche, wenn das Bild unbeeinflußt ist, rechtwinklig ist und den Rändern des Bildes entspricht.

6. Vorrichtung nach Anspruch 5, bei welcher der Bildrahmen einen sogenannten DrahtBildrahmen aufweist, nämlich ein Gitternetz von Linien, welche innerhalb der Umrißlinie enthalten sind, und welche, wenn das Bild unbeeinflußt ist, parallel zu den Rändern der Umrißlinie liegen.

7. Vorrichtung nach einem der vorhergehenden Ansprüche, bei welcher, wenn die Befehlsinformation eine Anweisung umfaßt, welche zur Folge hat, daß das Bild derart beeinflußt wird, daß es nicht den gesamtem Bereich des unbeeinflußten Bildes bedeckt, die Verarbeitungssoftware auf die Tätigkeit einer automatischen Größensteuerung der manuellen Eingabeeinrichtung (48) reagiert, um das beeinflußte Bild bis zu einer Größe auszudehnen, daß es die gesamte Fläche des unbeeinflußten Bildes bedeckt.

8. Vorrichtung nach einem der vorhergehenden Ansprüche, bei welcher die Bildschirmsoftware wirksam wird, um entlang der Unterseite des bei dem Datensichtgerät (42) vorgesehenen Bildschirms eine Reihe (62) von Labels anzuzeigen, welche Betriebsfunktionen ausweisen, die zur Zeit durch Betätigen entsprechender Funktionstasten der manuellen Eingabeeinrichtung (48) verfügbar sind.

9. Vorrichtung nach einem der vorhergehenden Ansprüche, welche eine Vielzahl von Computern (40) enthält, von denen jeder selektiv mit der Bildbeeinflussungsschaltung verbindbar ist.

10. Computer zur Verwendung mit einer Bildbeeinflussungsschaltung, welche auf eine gewünschte Beeinflussung repräsentierende Daten reagiert, um ein durch ein Videosignal repräsentiertes Bild, welches diesem zugeführt worden ist, durch Verändern von mindestens einem geometrischen Parameter davon zu beeinflussen, wobei der Computer (40) umfaßt:
manuelle Eingabemittel (48, 50) zur Eingabe von Befehlsinformation, die anzeigt, auf welche Weise es gewünscht ist, daß das Bild verändert wird;
eine im Computer (40) enthaltene Verarbeitungssoftware, welche es dem Computer ermöglicht, als Prozessoreinrichtung auf die Befehlsinformation reagierend zu wirken, um eine gewünschte Beeinflussung repräsentierende Daten zu erzeugen; und
ein Datensichtgerät (42);
eine im Computer enthaltene Bildschirmsoftware, welche auf die Befehlsinformation reagiert, um das Datensichtgerät (42) zu veranlassen, einen Bildrahmen anzuzeigen, welcher der gleichen Beeinflussung unterzogen worden ist, wie sie für das Bild erwünscht war.

11. Computer nach Anspruch 10, welcher eine Betriebssoftware enthält, welche eine Fenstertechnik der Anzeige ermöglicht, welche bei dem Datensichtgerät (42) vorgesehen ist, und bei dem die Bildschirmsoftware wirksam ist, zu bewirken, daß der Bildrahmen in einem ersten Fenster (W1) angezeigt wird, und in einem zweiten Fenster (W2) eine Information in alphanumerischer Form anzuzeigen, welche jener entspricht, die durch den Bildrahmen in dem ersten Fenster (W1) angezeigt wird.

12. Computer nach Anspruch 11, bei welchem die Bildschirmsoftware wirksam ist, um in einem dritten Fenster (W3) alpanumerische Information anzuzeigen, welche es in Verbindung mit den Menuesteuertasten ermöglicht, daß verschiedene Betriebsarten zur Erzeugung der Daten ausgewählt werden können.

13. Computer nach Anspruch 10, 11 oder 12, bei welchem die Bildschirmsoftware imstande ist, einen Bereich anzuzeigen, welcher in der Ebene des unbeeinflußten Bildes liegt, größer als das unbeeinflußte Bild ist, und die Begrenzung (B) des darauf angezeigten unmanipulierten Bildes besitzt, wobei das Verhältnis des Bildrahmens mit der Begrenzung selbst dann beobachtet werden kann, wenn sich das beeinflußte Bild (repräsentiert durch den Bildrahmen) mindestens teilweise außerhalb des Bildrahmens befindet.

14. Computer nach einem der Ansprüche 10 bis 13, bei welchem der Bildrahmen eine Umrißlinie aufweist, welche, wenn das Bild unbeeinflußt ist, rechtwinklig ist und den Rändern des Bildes entspricht.

15. Computer nach Anspruch 14, bei welchem der Bildrahmen einen sogenannten DrahtBildrahmen aufweist, nämlich ein Gitternetz von Linien, welche innerhalb der Umrißlinie enthalten sind, und welche, wenn das Bild unbeeinflußt ist, parallel zu den Rändern der Umrißlinie liegen.

16. Computer nach einem der Ansprüche 10 bis 15, bei welchem, wenn die Befehlsinformation eine Anweisung umfaßt, welche zur Folge hat, daß das Bild derart beeinflußt wird, daß es nicht den gesamtem Bereich des unbeeinflußten Bildes bedeckt, die Verarbeitungssoftware auf die Tätigkeit einer automatischen Größensteuerung der manuellen Eingabeeinrichtung (48) reagiert, um das beeinflußte Bild bis zu einer Größe auszudehnen, daß es die gesamte Fläche des unbeeinflußten Bildes bedeckt.

17. Computer nach einem der Ansprüche 10 bis 16, bei welchem die Bildschirmsoftware wirksam wird, um entlang der Unterseite des bei dem Datensichtgerät (42) vorgesehenen Bildschirms eine Reihe (62) von Labels anzuzeigen, welche Betriebsfunktionen ausweisen, die zur Zeit durch Betätigen entsprechender Funktionstasten der manuellen Eingabeeinrichtung (48) verfügbar sind.

18. Computer nach einem der Ansprüche 10 bis 17, welcher mit der Bildbeeinflussungsschaltung verbunden ist, um dieser die Daten als die erzeugten Daten zuzuführen.

19. Computer nach einem der Ansprüche 10 bis 17, bei welchem die darin erzeugten Daten in einem darin befindlichen Speichermedium für ein späteres Zuführen zu der Bildbeeinflussungsschaltung gesichert werden können.

20. Computer nach Anspruch 19, welcher selektiv mit der Bildbeeinflussungsschaltung verbunden werden kann, um, wenn erwünscht, die gespeicherten Daten dieser zuzuführen.

21. Computer nach Anspruch 19, bei welchem das Speichermedium aus dem Computer, welcher nicht mit der Bildbeeinflussungsschaltung verbunden ist, entfernt und durch einen anderen gleichen Computer (40), der mit der Bildbeeinflussungsschaltung verbunden ist, gelesen und dem Bildbeeinflussungsschaltung durch den anderen Computer zugeführt werden kann.

22. Verfahren der Beeinflussung eines durch ein Videosignal repräsentierten Bildes, wobei das Verfahren folgende Schritte umfaßt:
Eingeben einer Befehlsinformation über manuelle Eingabemittel (48, 50), welche anzeigt, auf welche Weise es gewünscht ist, daß das Bild beeinflußt wird;
Erzeugen von Daten, die eine gewünschte Beeinflusssung repräsentieren, mit einer Prozessoreinrichtung, welche auf die Befehlsinformation reagiert; und
Beeinflussen mittels einer Bildbeeinflussungsschaltung (16R, 16G, 16B, 18R, 18G, 18B) eines durch ein Videosignal repräsentierten Bildes durch Verändern mindestens eines geometrischen Parameters davon als Reaktion auf die Daten;
dadurch gekennzeichnet,
daß die manuellen Eingabemittel (48, 50) eine Eingabeeinrichtung für den Computer (40) umfassen; und
daß der Computer (40) eine Verarbeitungssoftware enthält, welche es dem Computer ermöglicht, als Prozessoreinrichtung zu funktionieren; und durch die folgenden Schritte:
Anzeigen eines Bildrahmens, welcher der gleichen Beeinflussung unterzogen worden ist, wie jener, welche für das Bild gewünscht worden ist, unter Verwendung des Computers (40), welcher ein Datensichtgerät (42) besitzt und eine Bildschirmsoftware enthält, welche das Datensichtgerät veranlaßt, den Bildrahmen anzuzeigen; und
selektives Verbinden des Computers (40) mit der Bildbeeinflussungsschaltung derart, daß der Computer on-line verwendet werden kann, um die Daten zu erzeugen und sie der Bildbeeinflussungsschaltung zur Steuerung der Bildbeeinflussungsschaltung zuzuführen, oder off-line verwendet werden kann, um die Daten zu erzeugen.

## Revendications

1. Appareil pour manipuler une image représentée par un signal vidéo, l'appareil comprenant :
un manipulateur d'image (16R, 16G, 16B, 18R, 18G, 18B) sensible à des données représentant une manipulation souhaitée pour manipuler une image, représentée par un signal vidéo qui lui est délivré, en changeant au moins un paramètre géométrique de celle-ci ;
un moyen d'entrée manuelle (48, 50) pour entrer de l'information d'instruction indicative de la façon dont on souhaite que l'image soit manipulée ; et
un moyen processeur sensible à ladite information d'instruction pour produire lesdites données représentant une manipulation souhaitée ;
caractérisé en ce que :
le moyen d'entrée manuelle (48, 50) comprend un moyen d'entrée manuelle vers un ordinateur (40) ;
l'ordinateur (40) contient un logiciel de traitement qui permet à l'ordinateur d'agir comme moyen processeur ;
l'ordinateur (40) possède un module d'affichage visuel (42) et comprend un logiciel d'affichage qui fait que le module d'affichage visuel affiche, en même temps que l'ordinateur est utilisé pour produire lesdites données, une vue qui est soumise à la même manipulation que celle souhaitée pour l'image ; et
l'ordinateur (40) peut être connecté de manière sélective au manipulateur d'image de telle façon que l'ordinateur puisse être utilisé en direct pour produire lesdites données et pour les délivrer au manipulateur pour commander le manipulateur, ou bien puisse être utilisé en différé pour produire lesdites données.

2. Appareil selon la revendication 1, dans lequel l'ordinateur (40) comprend un logiciel de mise en oeuvre qui permet la formation de fenêtres dans l'affichage fourni par le module d'affichage visuel (42) et dans lequel le logiciel d'affichage sert à faire que ladite vue est affichée dans une première fenêtre (W1) et à afficher, dans une deuxième fenêtre (W2), sous forme alphanumérique, l'information correspondant à celle présentée par la vue dans la première fenêtre (W1).

3. Appareil selon la revendication 2, dans lequel le logiciel d'affichage sert à afficher, dans une troisième fenêtre (W3), de l'information alphanumérique, qui, en relation avec des touches de commande de menu, active différents modes pour produire lesdites données à sélectionner.

4. Appareil selon la revendication 1, la revendication 2 ou la revendication 3, dans lequel le logiciel d'affichage est capable d'afficher une zone qui se trouve dans le plan de l'image non manipulée, qui est plus grande que l'image non manipulée, et dans laquelle est affichée la frontière (B) de l'image non manipulée, ce par quoi la relation de ladite image avec ladite frontière peut être observée même lorsque l'image non manipulée (représentée par la vue) est située au moins partiellement à l'extérieur de l'image complète.

5. Appareil selon l'une quelconque des revendications précédentes, dans lequel ladite vue comprend un contour, qui, lorsque l'image n'est pas manipulée, est rectangulaire et correspond aux bords de l'image.

6. Appareil selon la revendication 5, dans lequel ladite vue comprend ce qu'on appelle une image en fil, à savoir une grille de lignes qui sont contenues à l'intérieur dudit contour et qui, lorsque l'image n'est pas manipulée, sont parallèles aux bords dudit contour.

7. Appareil selon l'une quelconque des revendications précédentes, dans lequel, si ladite information d'instruction comprend une instruction qui a pour résultat que l'image est manipulée de telle manière qu'elle ne recouvre pas toute la surface de l'image non manipulée, le logiciel de traitement étant sensible à la mise en oeuvre d'une commande de taille automatique du moyen d'entrée manuelle (48) pour expanser l'image manipulée dans une mesure telle qu'elle recouvre toute la surface de l'image non manipulée.

8. Appareil selon l'une quelconque des revendications précédentes, dans lequel le logiciel d'affichage sert à afficher à la base de l'affichage fourni par le module d'affichage visuel (42), une ligne (62) d'étiquettes identifiant des particularités fonctionnelles couramment disponibles par la mise en oeuvre des touches de fonction correspondantes du moyen d'entrée manuelle (48).

9. Appareil selon l'une quelconque des revendications précédentes, incluant une pluralité desdits ordinateurs (40) chacun pouvant être connecté de manière sélective au manipulateur d'image.

10. Ordinateur pour utilisation avec un manipulateur d'image sensible à des données représentant une manipulation souhaitée pour manipuler une image, représentée par un signal vidéo qui lui est délivré, en changeant au moins un paramètre géométrique de celle-ci, l'ordinateur comprenant :
un moyen d'entrée manuelle (48, 50) pour entrer de l'information d'instruction indicative de la façon dont on souhaite que l'image soit manipulée ;
l'ordinateur (40) contenant un logiciel de traitement qui permet à l'ordinateur d'agir comme moyen processeur sensible à ladite information d'instruction pour produire lesdites données représentant une manipulation souhaitée ; et
un module d'affichage visuel (42) ;
l'ordinateur comprenant un logiciel d'affichage sensible à ladite information d'instruction pour faire que le module d'affichage visuel (42) affiche, en même temps que l'ordinateur est utilisé pour produire lesdites données, une vue qui est soumise à la même manipulation que celle souhaitée pour l'image.

11. Ordinateur selon la revendication 10, qui comprend un logiciel de mise en oeuvre qui permet la formation de fenêtres dans l'affichage fourni par le module d'affichage visuel (42) et dans lequel le logiciel d'affichage sert à faire que ladite vue est affichée dans une première fenêtre (W1) et à afficher, dans une deuxième fenêtre (W2), sous forme alphanumérique, l'information correspondant à celle présentée par la vue dans la première fenêtre (W1).

12. Ordinateur selon la revendication 11, dans lequel le logiciel d'affichage sert à afficher, dans une troisième fenêtre (W3), de l'information alphanumérique, qui, en relation avec des touches de commande de menu, active différents modes pour produire lesdites données à sélectionner.

13. Ordinateur selon la revendication 10, la revendication 11 ou la revendication 12, dans lequel le logiciel d'affichage est capable d'afficher une zone qui se trouve dans le plan de l'image non manipulée, qui est plus grande que l'image non manipulée, et dans laquelle est affichée la frontière (B) de l'image non manipulée, ce par quoi la relation de ladite image avec ladite frontière peut être observée même lorsque l'image non manipulée (représentée par la vue) est située au moins partiellement à l'extérieur de l'image complète.

14. Ordinateur selon l'une quelconque des revendications 10 à 13, dans lequel ladite vue comprend un contour, qui, lorsque l'image n'est pas manipulée, est rectangulaire et correspond aux bords de l'image.

15. Ordinateur selon la revendication 14, dans lequel ladite vue comprend ce qu'on appelle une image en fil, à savoir une grille de lignes qui sont contenues à l'intérieur dudit contour et qui, lorsque l'image n'est pas manipulée, sont parallèles aux bords dudit contour.

16. Ordinateur selon l'une quelconque des revendications 10 à 15, dans lequel, si ladite information d'instruction comprend une instruction qui a pour résultat que l'image est manipulée de telle manière qu'elle ne recouvre pas toute la surface de l'image non manipulée, le logiciel de traitement étant sensible à la mise en oeuvre d'une commande de taille automatique du moyen d'entrée manuelle (48) pour expanser l'image manipulée dans une mesure telle qu'elle recouvre toute la surface de l'image non manipulée.

17. Ordinateur selon l'une quelconque des revendications 10 à 16, dans lequel le logiciel d'affichage sert à afficher à la base de l'affichage fourni par le module d'affichage visuel (42), une ligne (62) d'étiquettes identifiant des particularités fonctionnelles couramment disponibles par la mise en oeuvre des touches de fonction correspondantes du moyen d'entrée manuelle (48).

18. Ordinateur selon l'une quelconque des revendications 10 à 17, qui est connecté au manipulateur d'image pour lui délivrer lesdites données lorsque les données sont créées.

19. Ordinateur selon l'une quelconque des revendications 10 à 17, dans lequel lesdites données qui y sont créées peuvent y être sauvegardées sur un support de mémorisation pour délivrance ultérieure au manipulateur d'image.

20. Ordinateur selon la revendication 19, qui peut être connecté de manière sélective au manipulateur d'image pour délivrer lesdites données qui y sont mémorisées lorsque cela est souhaité.

21. Ordinateur selon la revendication 19, dans lequel ledit support de mémorisation peut être retiré de l'ordinateur (40), qui n'est pas connecté au manipulateur d'image, et être lu par un autre ordinateur (40) semblable connecté au manipulateur d'image et être délivré au manipulateur d'image par l'autre ordinateur.

22. Procédé de manipulation d'une image représentée par un signal vidéo, le procédé comprenant les étapes :
d'entrée, à l'aide d'un moyen d'entrée manuelle (48, 50), d'information d'instruction indicative de la façon dont on souhaite que l'image soit manipulée ;
de production de données représentant une manipulation souhaitée, le moyen processeur étant sensible à ladite information d'instruction ; et,
de manipulation, à l'aide d'un manipulateur d'image (16R, 16G, 16B, 18R, 18G, 18B) d'une image représentée par un signal vidéo délivré au manipulateur d'image en changeant au moins un paramètre géométrique de celle-ci en réponse auxdites données ;
caractérisé en ce que :
le moyen d'entrée manuelle (48, 50) comprend un moyen d'entrée manuelle vers un ordinateur (40) ;
l'ordinateur (40) contient un logiciel de traitement qui permet à l'ordinateur d'agir comme moyen processeur ; et par les étapes :
d'affichage d'une vue qui est soumise à la même manipulation que celle souhaitée pour l'image en utilisant l'ordinateur (40) qui possède un module d'affichage visuel (42) et qui contient un logiciel d'affichage qui fait que le module d'affichage visuel affiche la vue ; et,
de connexion de manière sélective de l'ordinateur (40) au manipulateur d'image de telle façon que l'ordinateur puisse être utilisé en direct pour produire lesdites données et les délivrer au manipulateur pour commander le manipulateur, ou bien puisse être utilisé en différé pour produire lesdites données.
